(19) Europäisches Patentamt / European Patent Office / Office européen des brevets

(11) **EP 2 652 702 B1**

(12) **FASCICULE DE BREVET EUROPEEN**

(45) Date de publication et mention de la délivrance du brevet:
**09.04.2014 Bulletin 2014/15**

(21) Numéro de dépôt: **11811090.7**

(22) Date de dépôt: **12.12.2011**

(51) Int Cl.:
*G06T 5/00* (2006.01)

(86) Numéro de dépôt international:
**PCT/FR2011/052951**

(87) Numéro de publication internationale:
**WO 2012/080643 (21.06.2012 Gazette 2012/25)**

(54) **MÉTHODE DE DÉTECTION ET DE QUANTIFICATION DU FLOU DANS UNE IMAGE NUMÉRIQUE**

VERFAHREN ZUR DETEKTION UND QUANTIFIZIERUNG VON UNSCHÄRFE AUF EINEM DIGITALBILD

METHOD OF DETECTING AND QUANTIFYING BLUR IN A DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2010 FR 1060445**

(43) Date de publication de la demande:
**23.10.2013 Bulletin 2013/43**

(73) Titulaire: **Université Paris Diderot - Paris 7
75205 Paris Cedex 13 (FR)**

(72) Inventeurs:
- **BERTHEAU, Philippe**
  **F-75011 Paris (FR)**
- **AMEISEN, David**
  **F-75005 Paris (FR)**

(74) Mandataire: **Cabinet Plasseraud
52, rue de la Victoire
75440 Paris Cedex 09 (FR)**

(56) Documents cités:
**US-A1- 2003 151 674**

- **Anonymous: "HSL and HSV", Wikipedia , 8 décembre 2010 (2010-12-08), pages 1-16, XP002632018, Extrait de l'Internet: URL:http: //en.wikipedia.org/w/index.php?ti tle=HSL_and_ HSV&oldid=401179452 [extrait le 2011-04-06]**
- **YEO T ET AL: "Autofocusing for tissue microscopy", IMAGE AND VISION COMPUTING, ELSEVIER, GUILDFORD, GB, vol. 11, no. 10, 1 décembre 1993 (1993-12-01), pages 629-639, XP026655714, ISSN: 0262-8856, DOI: DOI: 10.1016/0262-8856(93)90059-P [extrait le 1993-12-01]**
- **YU SUN ET AL: "Autofocusing Algorithm Selection in Computer Microscopy", INTELLIGENT ROBOTS AND SYSTEMS, 2005. (IROS 2005). 2005 IEEE/RSJ INTER NATIONAL CONFERENCE ON EDMONTON, AB, CANADA 02-06 AUG. 2005, PISCATAWAY, NJ, USA,IEEE, 2 août 2005 (2005-08-02), pages 419-425, XP010857113, ISBN: 978-0-7803-8912-0**

**Description**

La présente invention concerne une méthode de détection et de quantification du flou dans une image numérique et un programme d'ordinateur pour sa mise en oeuvre.

Dans de nombreux domaines où l'analyse d'image joue un rôle, par exemple l'imagerie médicale, il est important de pouvoir déterminer quelles images sont floues et à quel point elles le sont. La question est en général de déterminer les images utilisables, par exemple en vue d'un diagnostic.

Autrefois, l'évaluation était réalisée sur des images réelles, par l'oeil de l'expert ou du praticien. De nos jours, les images sont, ou peuvent être, numérisées, c'est-à-dire discrétisées en pixels ou points élémentaires de l'image. A chaque pixel est associé un ou plusieurs paramètres numériques permettant de donner sa valeur colorimétrique au pixel, selon un codage prédéterminé. On connaît par exemple le codage TSB (teinte, saturation, brillance ; en anglais : HSB, pour *hue, saturation, brightness*), ou sa variante TSV (teinte, saturation, valeur ; en anglais : HSV, pour *hue, saturation, value*).

Différentes techniques existent déjà pour quantifier le flou d'une image numérique. Se pose alors le problème du temps de calcul, qui doit être d'autant plus bref qu'on doit traiter beaucoup d'images, et celui de la pertinence du résultat.

Il existe notamment des méthodes pour tester la netteté d'une image simple. Certaines méthodes sont rapides au point de vue des calculs (de l'ordre de 100 ms par image de 512x512 pixels), mais peu fiables (auto-focus d'appareil photo, analyse de l'intensité des couleurs). Ces méthodes permettent assez efficacement de comparer un certain nombre d'images et d'en choisir la plus nette, mais sans pouvoir mesurer de manière absolue la netteté.

D'autres méthodes (transformée de Fourrier, transformée par ondelettes) sont plus complexes et plus lentes au point de vue des calculs (de l'ordre de 500 ms à 3s par image de 512x512 pixels) et présentent d'autres inconvénients (impossibilité de différencier une image unie d'une image floue).

Il existe de nombreux articles traitant de la détection du flou dans les images numériques. On peut citer notamment *Blur Détection for Digital Images Using Wavelet Transform* de HANGHANG TONG; MINGJING LI ; HONGJIANG ZHANG ; CHANGSHUI ZHANG ; 2004 IEEE International Conference on multimedia and expo : ICME 27-30/06/2004, Taipei, Taiwan. Cet article présente un algorithme de détection du flou par la transformée en ondelettes. L'analyse est également une fonction du carré du nombre de pixels. Ainsi, le temps de calcul pour une image est de l'ordre d'une seconde. De plus, les images floues utilisées pour les tests ont été produites en utilisant des images sources nettes, sur lesquelles ont été appliqués différents types de flou numériques (matrices de flou). Or, un flou numérique est beaucoup plus facile à détecter de manière très fiable qu'un flou « analogique », dû par exemple à un défaut de mise au point, ou un mouvement imprévu, lors de l'acquisition de l'image.

Une autre méthode est divulguée dans US 2003/0151674.

La présente invention a pour but de remédier à tout ou partie des inconvénients mentionnés ci-dessus, c'est-à-dire en particulier de fournir une méthode de quantification du flou à la fois très rapide et au moins aussi fiable, sinon plus, que les méthodes existantes, en particulier pour un flou de type « analogique ».

La solution de l'invention porte sur une méthode de détection et de quantification du flou dans une image numérique mettant en oeuvre un ordinateur et comprenant :

- une étape a) d'obtention d'une image numérique comprenant des pixels et des paramètres de codage colorimétrique associés aux pixels ;
- une étape b) d'obtention d'un paramètre de brillance pour chaque pixel à partir de l'image numérique, l'étape b) comprenant une opération de convolution avec une matrice de détection de bords ;
- une étape c) de calcul d'un score S1 comprenant le maximum, calculé sur tous les pixels, du paramètre de brillance obtenu à l'étape b) ; et
- une étape d) d'évaluation de l'image numérique, l'image numérique étant considérée comme floue si le score S1 obtenu à l'étape c) est strictement inférieur (10) à un premier seuil prédéterminé, le score S1 fournissant une première quantité de flou (11) présente dans l'image numérique.

Par « obtention d'une image numérique », on entend qu'on se procure une image numérique. Celle-ci peut être préexistante ou bien elle peut être générée par tout moyen approprié connu de l'homme du métier, comme une caméra CCD. Chaque pixel est une partie élémentaire de l'image numérique. En général, l'image est en deux dimensions (2D), c'est-à-dire que les pixels peuvent être repérés par deux coordonnées x et y.

A chaque pixel sont associés des paramètres de codage colorimétrique. Les plus connus sont le codage RVB (pour « rouge, vert, bleu ») ou *RGB* en anglais (pour « *red, green, blue* »). Citons aussi le TSV (pour « teinte, saturation, valeur ») et son analogue, le TSB (« teinte, saturation, brillance »), connus en anglais sous les sigles *HSV* et *HSB* (*hue, saturation, value* et *hue, saturation, brightness*). Ces systèmes de codage sont en général analogues et on peut passer de l'un à l'autre par des relations de conversion connues. La brillance est analogue à la luminosité.

L'image peut avoir une forme quelconque. Elle est en général rectangulaire ou carrée. On peut la représenter par une matrice associant à chaque pixel ses paramètres colorimétriques. En effet, même si l'image n'est pas rectangulaire, on peut toujours ajouter des pixels « manquants » et leur attribuer des paramètres neutres. Ceci revient, par exemple, pour une image ronde, à ajouter des coins.

Il faut aussi préciser que la représentation matricielle, pour commode qu'elle soit, n'est pas la seule possible. Il serait tout à fait équivalent, pour la méthode selon l'invention, de réaliser les mêmes calculs sans les représenter matriciellement. La représentation matricielle est appréciée, car elle se prête facilement à une programmation informatique et permet d'exprimer les calculs de façon condensée. Toutefois, ce qui importe n'est pas la forme du calcul, mais bien plutôt sa fonction et son résultat.

Après l'étape a) d'acquisition (ou obtention) d'une image numérique, on calcule à l'étape b) un paramètre de brillance pour chaque pixel.

L'étape b) comprend un détourage de l'image numérique (pour faire ressortir les bords) et une extraction d'un paramètre de brillance par pixel. Le détourage s'obtient par une opération de convolution avec une matrice de détection de bords.

Une image peut être représentée par une matrice M pour laquelle chaque valeur $M(x,y)$ équivaut à la valeur du pixel de l'image à la position $(x,y)$. Cette matrice est également équivalente à une fonction à deux dimensions $f(x,y)$, qui pour chaque valeur de x et de y, et est égale à la valeur du pixel à la position $(x,y)$.

Soit $lum(f(x,y))$ la fonction extrayant valeur de la luminosité du pixel $f(x,y)$.

On peut détecter qu'un pixel $(x,y)$ d'une image est un bord quand la valeur de la norme du gradient de $lum(f(x,y)$ est supérieure à un certain seuil (Slum) en $(x,y)$. ($|\mathbf{grad}\ lum(f(x,y))| > Slum$).

En conservant les valeurs supérieures à un seuil Slum du gradient de l'intensité des pixels de l'image, on détecte les pixels appartenant à des bords d'une image. (par exemple, avec Slum = 20/255)

Une autre manière, plus efficace, est de détecter qu'un pixel $(x,y)$ d'une image est un bord quand la valeur de la norme du gradient de la matrice M a un maximum local en $(x,y)$, c'est à dire quand $|\mathbf{grad}\ lum(f(x,y))| > 0$ et quand la valeur du laplacien de $lum(f(x,y))$ est nulle en $(x,y)$. ($\mathbf{grad}^2\ lum(f(x,y)) = 0$)

En conservant les maxima locaux du gradient de l'intensité des pixels de l'image, on détecte les pixels appartenant à des bords d'une image.

Voici quelques exemples de matrices de détection de bords :

Matrice de Laplace octogonale :

$$MDB = \begin{matrix} +1 & +1 & +1 \\ +1 & -8 & +1 \\ +1 & +1 & +1 \end{matrix}$$

Matrice de Laplace carrée :

$$MDB = \begin{matrix} 0 & +1 & 0 \\ +1 & -4 & +1 \\ 0 & +1 & 0 \end{matrix}$$

Matrice de Sobel :

$$MDB = \begin{matrix} +1 & 0 & -1 \\ +2 & 0 & -2 \\ +1 & 0 & -1 \end{matrix}$$

Matrice de Prewitt:

$$MDB \quad = \quad \begin{array}{ccc} +1 & 0 & -1 \\ +1 & 0 & -1 \\ +1 & 0 & -1 \end{array}$$

L'extraction d'une valeur de brillance se fait à partir du codage colorimétrique des pixels, qui contient cette information.

Le produit de convolution d'une matrice (l'image numérique) par une seconde matrice (noyau de convolution, ici une matrice de détection de bords) est une matrice (représentant ici l'image de détection de bords, c'est-à-dire une image détourée) dans laquelle la valeur de chaque pixel est une combinaison linéaire de la valeur du pixel considéré et de celle de ses voisins. La seconde matrice (matrice de détection de bords) contient les coefficients de la combinaison linéaire. La combinaison linéaire vise à faire ressortir les bords, au sens précisé ci-dessus, contenus dans l'image numérique de départ. Nous donnons ci-après un exemple de calcul.

Soit M une première matrice, de dimension (Ma, Mb) (avec Ma lignes et Mb colonnes), représentant l'un des composants de l'image (la luminosité par exemple), et soit MDB une seconde matrice, de dimension (MDBa,MDBb), (avec MDBa lignes et MDBb colonnes), la matrice de détection de bords. Par convention, les coordonnées de MDB ont été disposées par rapport à son centre, si ses dimensions sont impaires, ou par rapport à la colonne et la ligne qui sont à la fois les plus proches du centre et les moins éloignés de la première coordonnée de la matrice, si ses dimensions sont paires. Exemple : pour $MDB1 = \begin{array}{ccc} 0 & -1 & 0 \\ -1 & 4 & -1 \\ 0 & -1 & 0 \end{array}$, de dimension 3x3, la numérotation est la suivante :

MDB1(-1,-1)=0, MDB1(-1,0)=-1, MDB1(-1,1)=0,
MDB1 (0,-1 = -1, MDB1 (0,0)= 4, MDB1 (0,1 = -1,
MDB1 (1,-1)= 0, MDB1 (1,0)= -1, MDB1 (1,1)= 0.

Soit M' la matrice, de dimension (Ma,Mb) résultant de la convolution des matrices M et MDB. Pour calculer M', nous procédons comme suit :

$$M'(x,y) = \sum_{(m>-MDBa/2)}^{(MDBa/2)} \sum_{(n>-MDBb/2)}^{(MDBb/2)} MDB(m,n) * M(x+m,y+n)$$

Avec m entier, compris dans l'intervalle ]-MDBa/2 ;MDBa/2],
n entier, compris dans l'intervalle ]-MDBb/2 ; MDBb/2],
x entier compris dans l'intervalle [0 ; Ma-1], y entier compris dans l'intervalle [0 ; Mb-1].
De plus, M'(x,y)=0 avec x<MDBa/2-1 ou y<MDBb/2-1, ou x≥Ma-1-(MDBa/2-1) ou y≥Mb-1-(MDBb/2-1).
Enfin, M'(x,y) n'est pas défini pour x<0 ou y<0 ou x>Ma-1 ou y>Mb-1.

Ainsi, la convolution de l'image complète avec la matrice de détection de bords aura pour résultat une nouvelle image, dont chacun des composants (rouge, vert, bleu, ou teinte, saturation, luminosité par exemple) auront été convolués avec la matrice de détection de bords.

A l'étape c), on calcule un score (ou résultat) S1 qui comprend le maximum, calculé sur tous les pixels, du paramètre de brillance obtenu à l'étape b). S1 peut être égal à ce maximum (cas le plus simple), mais il est clair qu'un multiple de ce maximum, ou plus généralement la transformation de ce maximum par une fonction monotone conviendrait également.

L'étape d) est l'étape de détection. L'image est considérée comme floue si le score S1 est strictement inférieur un premier seuil prédéterminé. La détermination de ce seuil résulte en général de l'expérience. Sa valeur peut dépendre du type d'image numérique considéré et de la sévérité que l'on souhaite donner au critère de détection de flou.

En outre, le paramètre S1 fournit une première quantité de flou dans l'image. Plus exactement, c'est 1 moins S1 qui quantifie le flou, car plus S1 est faible, plus le flou est grand.

Des tests ont montré que la méthode fournit des résultats conformes à ce que l'oeil humain considère comme plus ou mois flou, en particulier dans le cas du flou « analogique », dû à une mise au point déficiente d'un appareil à focalisation, par exemple un microscope optique.

En outre, la méthode est rapide et permet de traiter un grand nombre d'images. La plupart des algorithmes de calcul utilisés dans l'art antérieur (transformée de Fourier, ondelettes, ...etc.) nécessitent un temps de calcul en N au carré, N étant le nombre de pixels, alors que la méthode selon l'invention est linéaire (temps de calcul proportionnel à N). En outre, la méthode est absolue, car elle ne nécessite pas de comparer l'image avec une image étalon.

La méthode, appliquée à la question de la focalisation d'un appareil de production d'image, permet de corriger rapidement une focalisation incorrecte (correction du flou « analogique »).

Les étapes b) et c) mettent en oeuvre un ordinateur.

Selon des modes de réalisations particuliers, l'invention peut mettre en oeuvre une ou plusieurs des caractéristiques suivantes :

- l'étape b) est une étape b1) de convolution de l'image numérique avec la matrice de détection de bords pour obtenir une image de détection de bords et d'extraction dudit paramètre de brillance pour chaque pixel à partir de l'image de détection de bords. Dans l'étape b1), la convolution a lieu avant l'extraction de la brillance.
- l'étape b) est une étape b2) d'extraction d'une valeur de brillance pour chaque pixel à partir de l'image numérique pour obtenir une matrice de brillance et de convolution de la matrice de brillance avec la matrice de détection de bords pour obtenir ledit paramètre de brillance pour chaque pixel. L'étape b2) est une alternative à l'étape b1), où la convolution a lieu après l'extraction de la brillance. Elle conduit en général au même résultat, avec l'avantage de réduire la quantité de calculs, car la convolution ne porte par sur tous les paramètres de l'image numérique, mais seulement la brillance.
- le paramètre de brillance est la brillance au sens du codage « teinte, saturation, brillance » (TSB). Parmi toutes les définitions possibles d'une brillance ou d'une luminosité, la brillance au sens du codage TSB donne de bons résultats. En outre, si l'image numérique est directement codée en TSB, les calculs d'extraction du paramètre B sont triviaux.
- le paramètre de brillance et le score S1 étant exprimés en pourcentage, le premier seuil prédéterminé est compris entre 90% et 100%, de préférence entre 95% et 99,5%. Ces plages sont des plages préférées pour le flou de type « analogique », en ce sens que le score S1 conduit alors, sur un grand nombre d'images tests, à des résultats conformes à ce que l'oeil humain considère comme flou ou net.
- le premier seuil prédéterminé est compris entre 97% et 99%. Ces plages sont encore plus préférées dans le cas du flou « analogique ».
- à l'étape c), on calcule un second score S2 comprenant un quotient comportant : au numérateur, la somme, calculée sur tous les pixels, des paramètres de brillance obtenus à l'étape b) dépassant un seuil de brillance prédéterminé, et, au dénominateur, la somme, calculée sur tous les pixels, des paramètres de brillance obtenus à l'étape b) ; et à l'étape d), l'image numérique est également considérée comme floue si le score S2 obtenu à l'étape c) est strictement inférieur à un second seuil prédéterminé, le score S2 fournissant en outre une seconde quantité de flou présente dans l'image numérique. Ce paramètre, ou score, S2 vient compléter le premier score S1. Pour être considérée comme nette, l'image doit en outre posséder un score S2 supérieur ou égal à un second seuil prédéterminé. Les mêmes remarques d'interprétation, faites pour le calcul de S1 et le premier seuil prédéterminé, s'appliquent au calcul de S2 et au second seuil. En particulier, le score S2 peut être le quotient exprimé ci-dessus, ou bien une fonction monotone de ce quotient. Le second seuil prédéterminé et le seuil de brillance peuvent être issus de et affinés par l'expérience. Le score S2 donne en général une quantification plus fine du flou présent dans l'image numérique que le score S1. On peut par exemple utiliser le score S1 en « tout ou rien », c'est-à-dire décider que l'image est floue ou nette sur la base du score S1. On peut utiliser le score S2 comme une quantification du flou.
- le paramètre de brillance et le score S2 étant exprimés en pourcentage, le seuil de brillance est compris entre 3% et 40%, de préférence entre 5% et 20%, et le second seuil prédéterminé est compris entre 50% et 100%, de préférence entre 70% et 90%. Ces plages sont des plages préférées pour le flou de type « analogique », en ce sens que les scores S1 et S2 conduisent alors, sur un grand nombre d'images tests, à des résultats conformes à ce que l'oeil humain considère comme flou ou net.
- le seuil de brillance est compris entre 7% et 15% et le second seuil prédéterminé est compris entre 75% et 85%. Ces plages sont encore plus préférées dans le cas du flou « analogique ».

Dans l'étape b1), on convolue d'abord l'image numérique avec une matrice de détection de bords (MDB). En termes matriciels, on calcule le produit de convolution de la matrice représentant l'image numérique avec une matrice dite de « détection de bords ». Le résultat de la convolution est une nouvelle matrice, représentant une image de détection de bords. La fonction de ce calcul est de détourer l'image numérique, c'est-à-dire de renforcer les bords. Le résultat est une nouvelle image, où les bords sont renforcés.

Ensuite, à partie de l'image de détection de bords (ou de sa matrice représentative), on extrait pour chaque pixel de cette image, un paramètre de brillance. En pratique, on part des paramètres colorimétriques et on calcule un paramètre de brillance. Si le codage est le TSB, cela revient à ne conserver que le « B » (brillance). Si on a utilisé un autre codage, les calculs sont plus compliqués, mais ne posent pas de problème particulier.

L'étape b2) est une alternative possible à l'étape b1). Elle se distingue par le fait que l'on commence par extraire une valeur de brillance pour chaque pixel. On se retrouve avec une image de brillance, représentée par une matrice de brillance. Puis on convolue, cette matrice de brillance avec une matrice de détection de bords. On obtient ainsi pour chaque pixel un paramètre de brillance. Cette alternative est équivalente du point de vue de la fonction et du résultat, et nécessite en général moins de calculs, puisque la convolution ne porte que sur une matrice à un paramètre colorimétrique (valeur de brillance) au lieu de porter sur une matrice plus épaisse comportant plusieurs paramètres pour chaque pixel.

L'invention concerne également un produit de type programme d'ordinateur, comprenant au moins une séquence d'instructions stockée et lisible par un processeur, qui, une fois lue par ce processeur, provoque la réalisation des étapes b), c) et d) de la méthode telle que décrite ci-dessus.

Selon un mode de réalisation particulier, le produit peut être un support lisible par un ordinateur comportant le produit de type programme d'ordinateur.

D'autres particularités et avantages de la présente invention apparaîtront dans la description ci-après d'exemples de réalisation non limitatifs, en référence aux dessins annexés, dans lesquels :

- les figures 1 A et 1 B représentent deux images d'un même échantillon prises au microscope avec deux mises au point différentes, de manière à illustrer la notion de flou analogique dû à une « mauvaise » mise au point
- les figures 2A et 2B représentent deux images d'un autre échantillon prises au microscope avec deux mises au point différentes,
- la figure 3A illustre une méthode de détection et de quantification du flou dans une image numérique conforme à l'invention,
- la figure 3B illustre une variante de la méthode conforme à l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

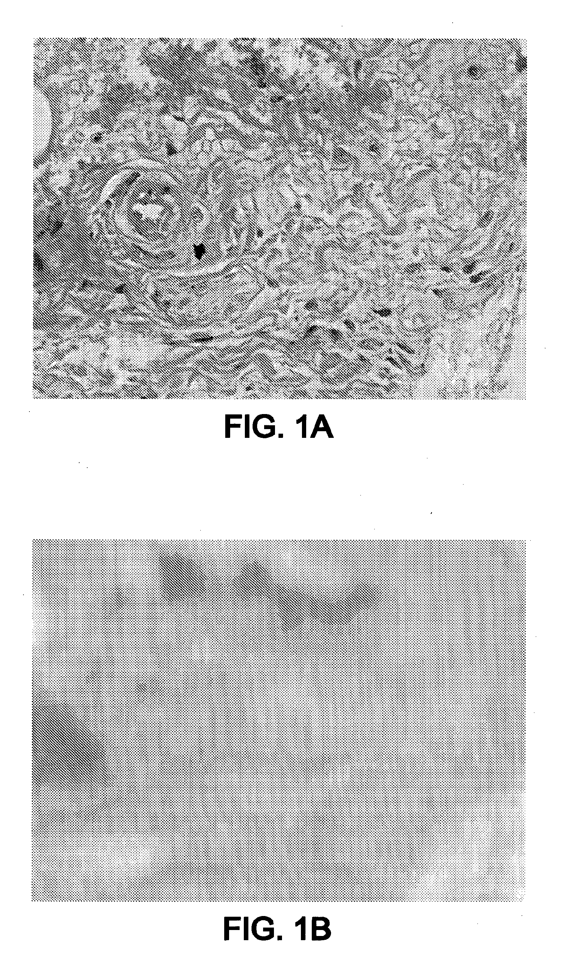

Les figures 1A et 1 B représentent deux images d'un même échantillon prises au microscope avec deux mises au point différentes. L'image 1A a l'air « nette », tandis que l'image 1 B a l'air « floue ».

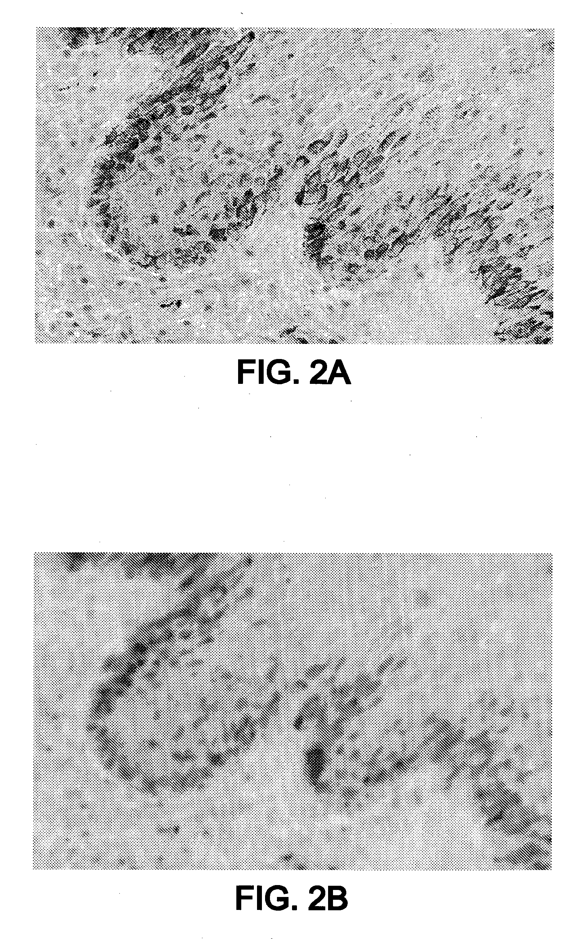

De même, les figures 2A et 2B représentent deux images d'un même second échantillon avec deux mises au point différentes. L'image 2A a l'air « nette », tandis que l'image 2B a l'air « floue ».

Une méthode selon l'invention a été appliquée à ces images avec les paramètres suivants :

- seuil de brillance 20/255, c'est-à-dire 7,8% (pour le calcul de S2) et second seuil prédéterminé de 75% ; S1 a été calculé en utilisant une étape b) de type b2) ;
- premier seuil prédéterminé de 98%.

Les résultats suivants ont été obtenus :

- image 1 A : score S1 de 100%, score S2 de 76,83%,
- image 1 B : score S1 de 17%, score S2 de 0,88%,
- image 2A : score S1 de 100%, score S2 de 97,07%,
- image 2B : score S1 de 58%, score S2 de 43,56%.

Il s'ensuit que l'image 1A est détectée comme nette du point de vue du score S2 (S2 est supérieur ou égal au second seuil prédéterminé qui est de 75%) comme de celui du score S1 (S1 est supérieur ou égal au premier seuil prédéterminé qui est de 98%). La quantité de flou dans l'image 1 A est donnée par les scores S1 et S2. Au contraire, pour l'image 1 B, le score S2 est strictement inférieur au second seuil prédéterminé et S1 est strictement inférieur au premier seuil prédéterminé. L'image 1 B est donc détectée comme floue. La quantité de flou dans l'image 1 B est donnée par les scores S1 et S2. On peut aussi, si l'on préfère, exprimer la quantité de flou par 1-S1 et 1-S2, pour avoir des quantités qui croient à mesure que le flou est plus important.

De même, l'image 2A est détectée comme nette du point de vue du score S2 (S2 est supérieur ou égal au second seuil prédéterminé) comme de celui du score S1 (S1 est supérieur ou égal au premier seuil prédéterminé). Au contraire, pour l'image 1 B, le score S2 est strictement inférieur au second seuil prédéterminé et S1 est strictement inférieur au premier seuil prédéterminé. L'image 1 B est donc détectée comme floue.

On peut aussi en déduire que pour les images 1 B et 2B, la focalisation n'est pas adaptée.

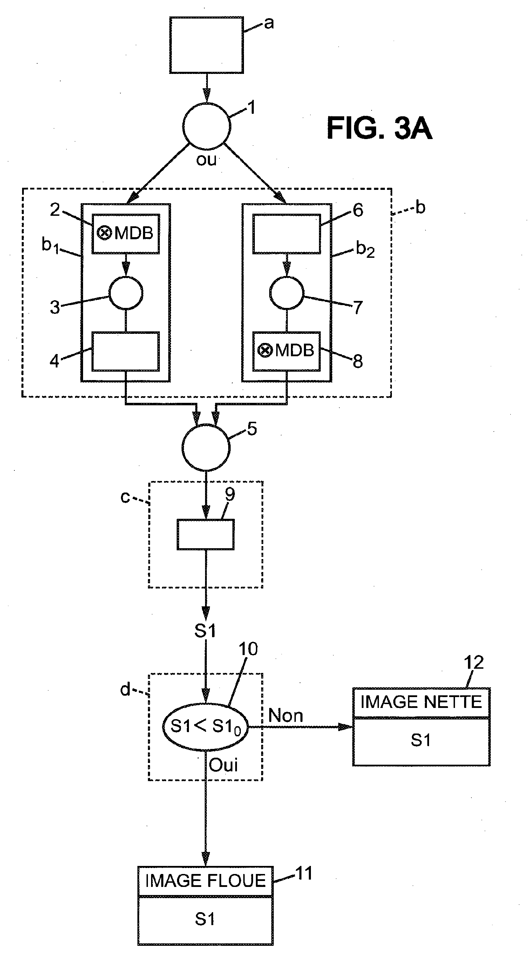

La figure 3A illustre une méthode de détection et de quantification du flou dans une image numérique conforme à l'invention. L'étape a) consiste à obtenir une image numérique 1, par exemple à l'aide d'une caméra ou d'un appareil photo numériques. L'image peut par exemple avoir 512 X 512 pixels et être codée en TSB (teinte, saturation, brillance). Les paramètres de codage peuvent être exprimés de manière absolue, ou bien en pourcentage. 100% signifie que le paramètre est à son maximum sur une échelle prédéterminée (par exemple de 0 à 255).

Puis on réalise une étape b) de traitement d'image. Dans l'exemple, elle est de type b2). On commence par extraire (sous-étape 6) une valeur de brillance pour chaque pixel à partir de l'image numérique 1. Ainsi, pour chaque pixel, on a les paramètres T, S, B du codage colorimétrique et on ne conserve que le paramètre B. On obtient une matrice de brillance 7.

Cette matrice de brillance 7 est convoluée (sous-étape 8) avec une matrice de détection de bords MDB, par exemple celle dite de Laplace, matrice 3x3 qui a la forme suivante :

$$MDB = \begin{array}{ccc} +1 & +1 & +1 \\ +1 & -8 & +1 \\ +1 & +1 & +1 \end{array}$$

Ceci revient, en chaque endroit de l'image de brillance représentée par la matrice 7, à calculer un genre de laplacien des valeurs de brillance. Les bords contenus dans l'image résultat ont une valeur de brillance nulle.

De manière alternative, on peut utiliser une matrice de Sobel comme matrice de détection de bords. Dans ce cas :

$$MDB = \begin{array}{ccc} -2 & -2 & 0 \\ -2 & 0 & +2 \\ 0 & +2 & +2 \end{array}$$

On peut aussi utiliser des combinaisons linéaires (ou des rotations par multiples de pi/4) des matrices de Laplace et de Sobel, ou de leurs matrice transposées.

Les résultats de la convolution est une nouvelle matrice 5 (ou image) qui comporte un paramètre de brillance par pixel. Cette image est détourée par l'effet de la convolution.

Ensuite, à étape c), on calcule (sous-étape 9) le score S1. C'est le maximum sur tous les pixels du paramètre de brillance obtenu à l'issue des étapes b1) ou b2) (dans l'exemple, l'étape b2).

A l'étape d), on utilise le ou les résultats obtenus à l'étape c). Dans sa plus grande généralité, la méthode n'utilise que le score S1 défini ci-dessus (critère 10). S'il est strictement inférieur à un premier seuil prédéterminé $S1_0$ (par exemple 98%) l'image numérique 1 est considérée comme floue (cas 11). S'il est supérieur ou égal à ce premier seuil prédéterminé $S1_0$, l'image numérique 1 est considérée comme nette (cas 12). Le score S1 permet aussi de quantifier le flou. Plus exactement, plus 1-S1 est grand, plus le flou est grand.

Dans la méthode, l'étape b1) représente une alternative possible à l'étape b2). Dans l'étape b1), on part toujours de l'image numérique 1 représentable par une matrice. On commence par convoluer (sous-étape 2) cette matrice 1 avec la matrice de détection de bords MDB. Ainsi, la convolution porte sur tous les paramètres de l'image numérique et non seulement la brillance. On obtient une image de détection de bords 3. Ensuite, sous-étape 4, on extrait pour chaque pixel, à partir de l'image de détection de bords 3, un paramètre de brillance par pixel, ce qui forme la matrice 5.

L'étape b2) est une alternative à l'étape b1), qui en général requiert moins de calculs. Pour examiner une série d'images, on s'en tient en général à l'une ou l'autre des étapes b1) ou b2), pour des raisons d'homogénéité de traitement. Dit autrement, on choisit b1) ou b2) une fois pour toutes lorsqu'on examine une série d'images.

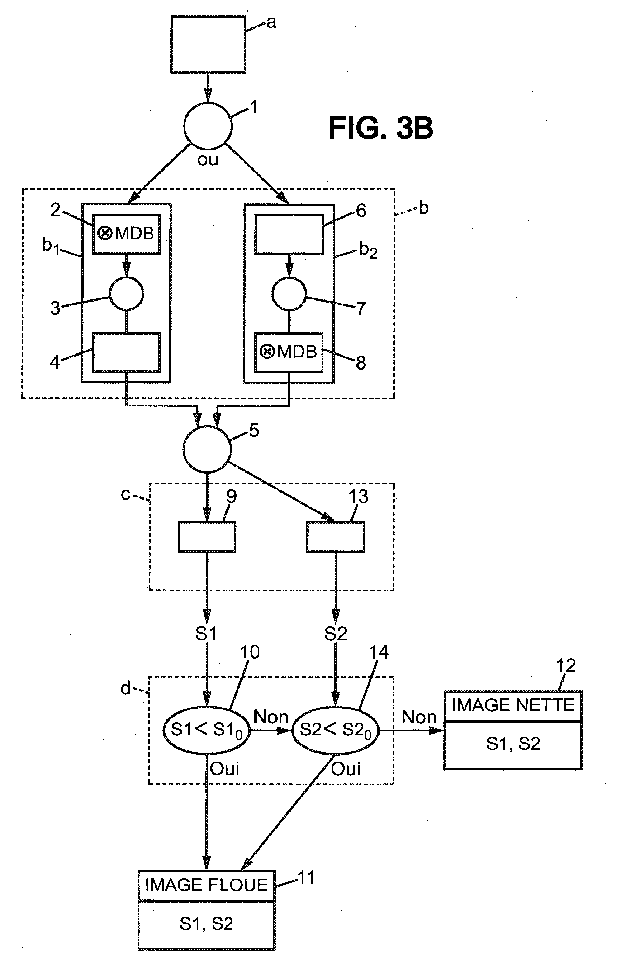

La figure 3B représente un mode de réalisation qui reprend toutes les caractéristiques du précédent (fig. 3A). Il diffère aux étapes c) et d) par la prise en compte d'un second score S2, venant compléter le premier score S1.

A l'étape c), on calcule (sous-étape 13) un quotient. Au dénominateur, on a la somme, sur tous les pixels, des paramètres de brillance de la matrice 5. Au numérateur, on a la même somme, sans les paramètres de brillance inférieur ou égaux à un seuil de brillance prédéterminé, par exemple 20/255 (soit 7,8%).

A l'étape d), on compare (test 14) le second score S2 à un second seuil prédéterminé $S2_0$ (par exemple 75%). Pour qu'une image soit considérée comme nette, il faut que S1 soit supérieur ou égal à $S1_0$ et que S2 soit supérieur ou égal à $S2_0$ (cas 12). A contrario, si S1 est strictement inférieur à $S1_0$ ou S2 est strictement inférieur à $S2_0$ (cas 11), l'image est considérée comme floue. S1 et S2 quantifient le flou (ou bien 1-S1 et 1-S2). On pourrait aussi calculer un score comprenant ces deux scores, par exemple une norme du vecteur (S1, S2).

Le calcul conjoint du premier score S1 et du second score S2 permet ainsi de détecter si une image est :

- totalement nette : dans ce cas, S1 et S2 sont supérieurs ou égaux à leurs seuils prédéterminés respectifs $S1_0$ et $S2_0$ ;
- partiellement nette, c'est-à-dire qu'il existe au moins une zone nette dans l'image et le reste de l'image est flou : dans ce cas, S1 est supérieur ou égal à $S1_0$ et S2 est strictement inférieur à $S2_0$ ;
- totalement floue : dans ce cas, S1 et S2 sont strictement inférieurs à leurs seuils prédéterminés respectifs $SI_0$ et $S2_0$.

Les valeurs exactes de S1 et S2 utilisées conjointement permettent également d'ordonner des images en fonction de leur niveau de netteté (ou de leur niveau de flou).

En particulier, les valeurs de S1 et S2 sont nécessaires pour déterminer qu'une image est partiellement nette, c'est-à-dire qu'elle contient à la fois au moins une zone nette et au moins une zone floue.

## Revendications

1. Méthode de détection et de quantification du flou dans une image numérique (1) mettant en oeuvre un ordinateur et comprenant :

   - une étape a) d'obtention d'une image numérique (1) comprenant des pixels et des paramètres de codage colorimétrique associés aux pixels ;
   - une étape b) d'obtention d'un paramètre de brillance (5) pour chaque pixel à partir de l'image numérique (1), l'étape b) comprenant une opération de convolution (2, 8) avec une matrice de détection de bords (MDB) ;
   - une étape c) de calcul (9) d'un score S1 comprenant le maximum, calculé sur tous les pixels, du paramètre de brillance (5) obtenu à l'étape b) ; et
   - une étape d) d'évaluation de l'image numérique, l'image numérique étant considérée comme floue si le score S1 obtenu à l'étape c) est strictement inférieur (10) à un premier seuil prédéterminé $S1_0$, le score S1 fournissant une première quantité de flou (11) présente dans l'image numérique,
   **caractérisée en ce que** :
   - à l'étape c), on calcule (13) un second score S2 comprenant un quotient comportant :

     - au numérateur, la somme, calculée sur tous les pixels, des paramètres de brillance (5) obtenus à l'étape b) dépassant un seuil de brillance prédéterminé, et
     - au dénominateur, la somme, calculée sur tous les pixels, des paramètres de brillance (5) obtenus à l'étape b) ; et

   - à l'étape d), l'image numérique (1) est également considérée comme floue si le score S2 obtenu à l'étape c) est strictement inférieur (14) à un second seuil prédéterminé $S2_0$, le score S2 fournissant en outre une seconde quantité (11) de flou présente dans l'image numérique.

2. Méthode selon la revendication 1, **caractérisée en ce que** l'étape b) est une étape b1) de convolution (2) de l'image numérique (1) avec la matrice de détection de bords (MDB) pour obtenir une image de détection de bords (3) et d'extraction (4) dudit paramètre de brillance (5) pour chaque pixel à partir de l'image de détection de bords (3).

3. Méthode selon la revendication 1, **caractérisée en ce que** l'étape b) est une étape b2) d'extraction (6) d'une valeur de brillance pour chaque pixel à partir de l'image numérique (1) pour obtenir une matrice de brillance (7) et de convolution (8) de la matrice de brillance (7) avec la matrice de détection de bords (MDB) pour obtenir ledit paramètre de brillance (5) pour chaque pixel.

4. Méthode selon l'une quelconque des revendications 1 à 3, **caractérisée en ce que** l'image numérique (1) est considérée :

   - comme totalement nette si les scores S1 et S2 sont supérieurs ou égaux à leurs seuils prédéterminés respectifs $S1_0$ et $S2_0$,
   - comme partiellement nette si le score S1 est supérieur ou égal au premier seuil prédéterminé $S1_0$ et le score S2 est strictement inférieur au second seuil prédéterminé $S2_0$, ou
   - comme totalement floue si les scores S1 et S2 sont strictement inférieurs à leurs seuils prédéterminés respectifs $S1_0$ et $S2_0$.

5. Méthode selon l'une quelconque des revendications 1 à 4, **caractérisée en ce que** le second score S2 étant exprimé en pourcentage, le seuil de brillance est compris entre 3% et 40%, de préférence entre 5% et 20%, et le second seuil prédéterminé est compris entre 50% et 100%, de préférence entre 70% et 90%.

6. Méthode selon l'une quelconque des revendications 1 à 5, **caractérisée en ce que** le paramètre de brillance (5) est la brillance au sens du codage « teinte, saturation, brillance » (TSB).

7. Méthode selon l'une quelconque des revendications 1 à 6, **caractérisée en ce que**, le paramètre de brillance (5) et le score S1 étant exprimés en pourcentage, le premier seuil prédéterminé est compris entre 90% et 100%, de préférence entre 95% et 99,5%.

8. Méthode selon l'une quelconque des revendications 1 à 7, **caractérisée en ce qu'**on ordonne des images en fonction de leur niveau de flou en utilisant conjointement les valeurs exactes des scores S1 et S2.

9. Méthode selon l'une quelconque des revendications 1 à 8, **caractérisée en ce qu'**on détermine la présence d'au moins une zone nette et au moins une zone floue dans une image en utilisant conjointement les valeurs exactes des scores S1 et S2.

10. Produit de type programme d'ordinateur, comprenant au moins une séquence d'instructions stockée et lisible par un processeur et qui, une fois lue par ce processeur, provoque la réalisation des étapes b), c) et d) de la méthode selon l'une quelconque des revendications précédentes.

11. Support lisible par un ordinateur comportant le produit selon la revendication 10.


**Patentansprüche**

1. Verfahren zur Erfassung und Quantifizierung der Unschärfe in einem digitalen Bild (1) unter Einsatz eines Computers und umfassend:

einen Schritt a), bei dem ein digitales Bild (1) erhalten wird, welches Pixel und Parameter einer Farbmetrik-Kodierung umfasst, die den Pixeln zugeordnet sind,
einen Schritt b), bei dem, ausgehend von dem digitalen Bild (1), für jedes Pixel ein Helligkeit-Parameter (5) erhalten wird, wobei der Schritt b) eine Faltungsoperation (2, 8) mit einer Matrix zur Kantendetektion (MDB) umfasst,
einen Schritt c) der Berechnung (9) von einem Ergebnis S1, welches das über alle Pixel berechnete Maximum des im Schritt b) erhaltenen Helligkeit-Parameters (5) umfasst, und
einen Schritt d) der Auswertung des digitalen Bildes, wobei das digitale Bild als unscharf betrachtet wird, wenn das im Schritt c) erhaltene Ergebnis S1 streng kleiner ist (10) als ein erster vorbestimmter Schwellenwert $S1_0$, wobei das Ergebnis S1 ein erstes in dem digitalen Bild vorliegendes Unschärfe-Ausmaß (11) liefert, **dadurch gekennzeichnet, dass**:

im Schritt c) ein zweites Ergebnis S2 berechnet wird (13), welches einen Quotienten umfasst, umfassend:

im Zähler die über alle Pixel berechnete Summe der im Schritt b) erhaltenen Helligkeit-Parameter (5), welche einen vorbestimmten Helligkeit-Schwellenwert überschreiten, und
im Nenner die über alle Pixel berechnete Summe der im Schritt b) erhaltenen Helligkeit-Parameter (5), und

im Schritt d) das digitale Bild (1) ebenfalls als unscharf betrachtet wird, wenn das im Schritt c) erhaltene Ergebnis S2 streng kleiner ist (14) als ein zweiter vorbestimmter Schwellenwert $S2_0$, wobei das Ergebnis S2 weiterhin ein zweites in dem digitalen Bild vorliegendes Unschärfe-Ausmaß (11) liefert.

2. Verfahren nach Anspruch 1, **dadurch gekennzeichnet, dass** der Schritt b) ein Schritt b1) der Faltung (2) des digitalen Bildes (1) mit der Matrix (MDB) zur Kantendetektion, um ein Bild zur Kantendetektion (3) zu erhalten, und der Extraktion (4) des Helligkeit-Parameters (5) für jedes Pixel ausgehend von dem Bild zur Kantendetektion (3) ist.

3. Verfahren nach Anspruch 1, **dadurch gekennzeichnet, dass** der Schritt b) ein Schritt b2) der Extraktion (6) eines Helligkeit-Werts für jedes Pixel, ausgehend von dem digitalen Bild (1), um eine Helligkeit-Matrix (7) zu erhalten, und der Faltung (8) der Helligkeit-Matrix (7) mit der Matrix (MDB) zur Kantendetektion ist, um den Helligkeit-Parameter (5) für jedes Pixel zu erhalten.

**4.** Verfahren nach einem der Ansprüche 1 bis 3, **dadurch gekennzeichnet, dass** das digitale Bild (1) betrachtet wird als:

vollständig scharf, wenn die Ergebnisse S1 und S2 größer oder gleich ihren jeweiligen vorbestimmten Schwellenwerten $S1_0$ und $S2_0$ sind,
teilweise scharf, wenn das Ergebnis S1 größer oder gleich dem ersten vorbestimmten Schwellenwert $S1_0$ ist, und das Ergebnis S2 streng kleiner als der zweite vorbestimmte Schwellenwert $S2_0$ ist, oder
vollständig unscharf, wenn die Ergebnisse S1 und S2 streng kleiner als ihre jeweiligen vorbestimmten Schwellenwerte $S1_0$ und $S2_0$ sind.

**5.** Verfahren nach einem der Ansprüche 1 bis 4, **dadurch gekennzeichnet, dass**, wenn das zweite Ergebnis S2 in Prozent ausgedrückt wird, der Helligkeit-Schwellenwert zwischen 3 % und 40 % liegt, bevorzugt zwischen 5 % und 20 %, und der zweite vorbestimmte Schwellenwert zwischen 50 % und 100 % liegt, vorzugsweise zwischen 70 % und 90 %.

**6.** Verfahren nach einem der Ansprüche 1 bis 5, **dadurch gekennzeichnet, dass** der Helligkeit-Parameter (5) die Helligkeit im Sinne der Kodierung "Farbwert, Sättigung, Helligkeit" (HSB) ist.

**7.** Verfahren nach einem der Ansprüche 1 bis 6, **dadurch gekennzeichnet, dass**, wenn der Helligkeit-Parameter (5) und das Ergebnis S1 in Prozent ausgedrückt werden, der erste vorbestimmte Schwellenwert zwischen 90 % und 100 % liegt, bevorzugt zwischen 95 % und 99,5 %.

**8.** Verfahren nach einem der Ansprüche 1 bis 7, **dadurch gekennzeichnet, dass** Bilder in Abhängigkeit von ihrem Unschärfe-Niveau geordnet werden, wobei die genauen Werte der Ergebnisse S1 und S2 gemeinsam verwendet werden.

**9.** Verfahren nach einem der Ansprüche 1 bis 8, **dadurch gekennzeichnet, dass** das Vorliegen von wenigstens einem scharfen Bereich und von wenigstens einem unscharfen Bereich in einem Bild unter gemeinsamer Verwendung der genauen Werte der Ergebnisse S1 und S2 bestimmt wird.

**10.** Computerprogramm-Produkt, umfassend wenigstens eine Abfolge von Befehlen, gespeichert in und lesbar von einem Prozessor, und welches, einmal durch diesen Prozessor ausgelesen, die Durchführung der Schritte b), c) und d) des Verfahrens nach einem der vorhergehenden Ansprüche bewirkt.

**11.** Computerlesbarer Träger, umfassend das Produkt nach Anspruch 10.

**Claims**

**1.** Method of detecting and quantifying blur in a digital image (1), making use of a computer and comprising:

- a step a) of obtaining a digital image (1) comprising pixels and colorimetric coding parameters associated with the pixels;
- a step b) of obtaining a brightness parameter (5) for each pixel, from the digital image (1), said step b) comprising a convolution operation (2, 8) with an edge detection matrix (MDB);
- a step c) of calculating (9) a score S1 comprising the maximum, calculated over all the pixels, of the brightness parameter (5) obtained in step b); and
- a step d) of evaluating the digital image, the digital image being considered to be blurred if the score S1 obtained in step c) is strictly less (10) than a first predetermined threshold $S1_0$, the score S1 providing a first quantity of blur (11) present in the digital image,
**characterized in that**:
- in step c), a second score S2 is calculated (13) including a quotient which comprises:

- in the numerator, the sum, calculated over all the pixels, of the brightness parameters (5) obtained in step b) which exceed a predetermined brightness threshold, and
- in the denominator, the sum, calculated over all the pixels, of the brightness parameters (5) obtained in step b); and

- in step d), the digital image (1) is also considered to be blurred if the score S2 obtained in step c) is strictly less (14) than a second predetermined threshold $S2_0$, the score S2 additionally providing a second quantity (11) of blur present in the digital image.

2. Method according to claim 1, **characterized in that** step b) is a step b1) of convolving (2) the digital image (1) with the edge detection matrix (MDB) in order to obtain an edge detection image (3), and extracting (4) said brightness parameter (5) for each pixel from the edge detection image (3).

3. Method according to claim 1, **characterized in that** step b) is a step b2) of extracting (6) a brightness value for each pixel from the digital image (1) in order to obtain a brightness matrix (7), and convolving (8) the brightness matrix (7) with the edge detection matrix (MDB) in order to obtain said brightness parameter (5) for each pixel.

4. Method according to any of claims 1 to 3, **characterized in that** the digital image (1) is considered to be:

  - completely sharp if the scores S1 and S2 are greater than or equal to their respective predetermined thresholds $S1_0$ and $S2_0$,
  - partially sharp if the score S1 is greater than or equal to the first predetermined threshold $S1_0$ and the score S2 is strictly less than the second predetermined threshold $S2_0$, or
  - entirely blurred if the scores S1 and S2 are strictly less than their respective predetermined thresholds $S1_0$ and $S2_0$.

5. Method according to any of claims 1 to 4, **characterized in that**, the second score S2 being expressed as percentages, the brightness threshold is between 3% and 40%, preferably between 5% and 20%, and the second predetermined threshold is between 50% and 100%, preferably between 70% and 90%.

6. Method according to any of claims 1 to 5, **characterized in that** the brightness parameter (5) is the brightness in the sense of the "hue, saturation, brightness" (HSB) coding system.

7. Method according to any of claims 1 to 6, **characterized in that**, the brightness parameter (5) and the score S1 being expressed as percentages, the first predetermined threshold is between 90% and 100%, preferably between 95% and 99.5%.

8. Method according to any of claims 1 to 7, **characterized in that** images are ordered according to their level of blur using the exact values of the scores S1 and S2 in conjunction.

9. Method according to any of claims 1 to 8, **characterized in that** the presence of at least one sharp region and at least one blurred region in an image is determined using the exact values of the scores S1 and S2 in conjunction.

10. Computer program product, comprising at least one sequence of instructions stored and readable by a processor and which, once read by this processor, causes steps b), c) and d) of the method according to any of the above claims to be carried out.

11. Computer-readable medium comprising the product according to claim 10.

**FIG. 1A**

**FIG. 1B**

FIG. 2A

FIG. 2B

FIG. 3A

IMAGE NETTE
12

S1

IMAGE FLOUE
11

S1

FIG. 3B

## RÉFÉRENCES CITÉES DANS LA DESCRIPTION

**Documents brevets cités dans la description**

• US 20030151674 A

**Littérature non-brevet citée dans la description**

• **HANGHANG TONG ; MINGJING LI ; HONGJIANG ZHANG ; CHANGSHUI ZHANG.** *IEEE International Conference on multimedia and expo : ICME 27-30/06/2004, Taipei, Taiwan,* 27 Juin 2004